# EUROPEAN PATENT SPECIFICATION

(11) **EP 4 017 933 B1**
(45) Date of publication and mention of the grant of the patent: **30.07.2025**
(21) Application number: 20758229.7
(22) Date of filing: 21.08.2020
(51) Int. Cl.: C09K 5/10, C09K 5/20, C23F 11/12, C23F 11/08, C23F 11/10

(54) **GLYCOL BASED HEAT-TRANSFER FLUID COMPRISING ORGANIC CARBOXYLIC ACID OR SALT THEREOF, METHODS FOR ITS PREPARATIONS AND USES THEREOF**
AUF GLYKOL BASIERENDE WÄRMEÜBERTRAGUNGSFLÜSSIGKEIT MIT ORGANISCHER CARBONSÄURE ODER SALZ DAVON, VERFAHREN ZU DEREN HERSTELLUNG UND VERWENDUNGEN DAVON
FLUIDE CALOPORTEUR À BASE DE GLYCOL COMPRENANT DE L'ACIDE CARBOXYLIQUE ORGANIQUE OU SON SEL, SES PROCÉDÉS DE PRÉPARATION ET SES UTILISATIONS

(30) Priority: 22.08.2019 EP 19193153
(43) Date of publication of application: 29.06.2022
(73) Proprietor: Arteco NV, 2900 Schoten (BE)
(72) Inventor: DE KIMPE, Jurgen P., 9051 Gent (BE); LIEVENS, Serge, 9051 Gent (BE)
(74) Representative: Nederlandsch Octrooibureau
(86) International application number: PCT/EP2020/073554
(87) International publication number: WO 2021/032886

(56) References cited:
- US-A- 4 759 864
- US-A- 6 143 243
- US-A1- 2003 015 685
- US-A1- 2005 247 907
- US-A1- 2007 131 898
- US-A1- 2013 207 025

## Description

### Field of the invention

The present invention relates to glycol based heat-transfer fluids comprising an organic carboxylic acid or salt thereof as defined in claim 1 and the use thereof as defined in claim 15.

### Background art

Heat-transfer fluids are widely employed in heat exchange systems associated with internal combustion engines, solar systems, fuel cells, electrical motors, generators, electronic equipment and the like. Heat-transfer fluids are generally composed of a base fluid and one or more additives.

Historically, water has been the preferred base fluid when considering heat-transfer. In many applications, antifreeze properties are needed and a base fluid consisting of water mixed with freezing point depressants like alcohols, glycols or salts is employed. Since alcohols or glycols employed as freezing point depressant will affect the properties of the heat-transfer fluid (e.g. density, kinematic viscosity, thermal conductivity, heat capacity) differently than when salts are employed as freezing point depressants, two distinct classes of heat-transfer fluids have emerged, namely alcohol/glycol-free or alcohol/glycol-containing heat-transfer fluids.

Water and glycol mixtures are the most widely employed base fluids because such mixtures are relatively stable, are compatible with the elastomers and plastics used in modern heat exchange systems, provide cost efficient freezing and boiling protection and can be formulated with a variety of corrosion inhibitors to provide the specific corrosion protection required for particular heat exchange systems.

Heat-transfer fluids generally contain further additives which may be employed to obtain a variety of functionalities, such as improving the heat-exchange properties, inhibiting corrosion etc. Since heat-transfer fluids are in continuous contact with metal parts, such as aluminum alloys, cast iron, steel, copper, brass, solder etc., they nearly always contain one or more corrosion inhibitors.

The ability of carboxylic acids to inhibit corrosion in automotive cooling systems was first reported more than 60 years ago. Aromatic carboxylic acids, such as benzoic acid and its derivatives, have been extensively studied and are used in Europe as corrosion inhibitors in commercial coolants. Coolants comprising only organic acid corrosion inhibitors, sometimes referred to as OAT (organic acid technology) coolants, exhibit low depletion rates, resulting in an extended lifetime of the coolant, and are often more environmentally friendly than coolants relying on inorganic salts for corrosion inhibition.

Recent research efforts have been directed towards long chain aliphatic organic carboxylates. Aliphatic carboxylic acids comprising 6 or more carbon atoms have been found to act as corrosion inhibitors, although large variations in performance exist depending on the acid and the substrate. For example, US2007/0152191 discloses the use of C₁₀-C₁₂ dicarboxylic acids as corrosion inhibitors.

US2005/247907A1 discloses the use of glycerol-containing by-products of processing triglycerides, which can be combined with a hydroxyl-containing compound or organic acid salt to form a deicing fluid suitable for use in engine fuels

US2013/207025A1 discloses the formulation of deicing fluids comprising hydroxyl-containing organic compounds and/or organic acid salts.

US2007/131898A1 discloses an anti-freeze composition for use in engine cooling systems.

US6143243A discloses the formulation of a corrosion inhibitor and a method of inhibiting cavitation-erosion of aluminium surfaces.

US4759864A discloses the formulation for a corrosion-inhibited antifreeze that exhibits synergistic corrosion properties for a variety of metal surfaces.

2 US2003015685A1 discloses de-icing fluids for airport runways.

Known heat transfer fluids employing organic carboxylate corrosion inhibitors, such as OAT heat transfer fluids, exhibit several disadvantages. For example, they are based on the corrosion inhibition of C₆ and higher carboxylates, such as C₈ or C₁₀ carboxylates, which are generally expensive. Additionally, the application of many higher carboxylates is limited or cannot be fully exploited because of their low water/glycol solubility.

It is an object of the present invention to provide improved glycol based heat-transfer fluids.

It is a further object of the present invention to provide glycol based heat-transfer fluids comprising reduced amounts of long-chain organic carboxylate, such as C₆ or higher organic carboxylate while possessing comparable or improved aluminium alloy corrosion inhibition.

It is a further object of the present invention to provide glycol based heat-transfer fluids possessing extended service life compared to known glycol based heat-transfer fluids, such as known glycol based heat-transfer fluids containing C₆ or higher organic carboxylates.

### Summary of the invention

The present inventors have surprisingly found that one or more of these objectives can be met by employing a composition as defined in claim 1.

As will be shown in the appended examples, it was surprisingly found that glycol based compositions comprising large amounts of short-chain carboxylic acid, such as more than 1 wt.%, preferably more than 2 wt.% of a short-chain organic carboxylic acid or salt thereof exhibit surprising corrosion inhibition on metal substrates such as aluminium.

Furthermore, in accordance with preferred embodiments of the invention, the present inventors have found that a glycol based composition comprising a short-chain organic carboxylic acid or salt thereof exhibits a sudden, non-linear increase in corrosion inhibition upon increasing the concentration of short-chain organic carboxylic acid or salt thereof.

In the art, short-chain organic carboxylates are not known to exhibit significant corrosion protection. Short-chain organic carboxylates have been investigated as freezing point depressants in glycol-free heat-transfer fluids. For example, US2007/158612 discloses glycol-free heat transfer compositions comprising a C₃ organic carboxylate freezing point depressant and a C₆-C₁₆ organic acid salt corrosion inhibitor.

It will be understood by the skilled person in light of the present disclosure that the compositions in accordance with the present invention effectively allow the provision of heat-transfer fluids or coolants which require less or even no further additives and/or which are capable of maintaining metal corrosion inhibition for longer periods of time than comparable compositions known in the art.

The invention is set out in the appended set of claims.

In accordance with preferred embodiments of the invention, the pitting corrosion potential as referred to herein is measured by rapid cyclic potentiokinetic polarization scanning (RCP).

In highly preferred embodiments of the invention, the pitting corrosion potential as referred to herein is measured by rapid cyclic potentiokinetic polarization scanning (RCP) in accordance with the method described in CEBELCOR (Centre Belge d'Etude de la Corrosion) publications Rapports Techniques, vol. 147, R.T. 272 (August 1984). This method comprises altering the potential of a rod shaped, epoxy embedded, stagnant aluminum working electrode (alloy AlMgSi0.5) having a polished (using 600 grit polishing silicon-carbide paper) working surface of 0.5 cm² with a scan rate of 0.5 mV/s in steps of 0.5mV versus a solid platinum auxiliary electrode (ref. 6.0330.0040, supplier Metroohm) while submerged in 100 grams of test liquid and employing a solid silver reference electrode (ref. 6.0331.010, supplier Methrohom); recording the density of current flowing between the working and auxilary electrode as a function of potential difference employing a potentiostat (VeraSTAT; Ametek^{®} Scientifc Instruments); and identifying the pitting corrosion potential Ep by a sudden exponential increase in current density.

### Description of embodiments

A first aspect of the invention concerns compositions according to claim 1.

### Glycol

As used herein, the term "monoethylene glycol" means "ethane-1,2-diol", and may also be referred to as "MEG".

As used herein, the term "monopropylene glycol" means "propane-1,2-diol", and may also be referred to as "MPG".

As used herein, the term "glycerol" means "propane-1,2,3-triol" and is synonymous with glycerin.

In embodiments of the invention a composition as described herein is provided, wherein the composition comprises more than 6 wt.% (by total weight of the composition) of the glycol, more than 7 wt.%, more than 8 wt.%, more than 9 wt.%, more than 10 wt.%, more than 11 wt.%, more than 12 wt.%, more than 13 wt.%, more than 14 wt.%, more than 15 wt.%, more than 16 wt.%, more than 17 wt.%, more than 18 wt.%, more than 19 wt.%, more than 20 wt.%, more than 25 wt.%, more than 30 wt.%, more than 35 wt.%, more than 40 wt.%, more than 45 wt.%, more than 50 wt.%, more than 55 wt.%, more than 60 wt.%, more than 65 wt.% or more than 70 wt.% of the glycol.

In preferred embodiments of the invention a composition as described herein is provided, wherein the composition comprises more than 10 wt.% (by total weight of the composition) of the glycol, preferably more than 20 wt.%, preferably more than 50 wt.%.

In embodiments of the invention a composition as described herein is provided, wherein the composition comprises less than 99 wt.% (by total weight of the composition) of the glycol, such as less than 98 wt.%, less than 97 wt.%, less than 96 wt.%, less than 95 wt.%, less than 94 wt.%, less than 93 wt.%, less than 92 wt.%, less than 91 wt.%, less than 90 wt.%, less than 89 wt.%, less than 88 wt.%, less than 87 wt.%, less than 86 wt.%, less than 85 wt.%, less than 84 wt.%, less than 83 wt.%, less than 82 wt.%, less than 81 wt.%, less than 80 wt.%, less than 75 wt.%, less than 70 wt.%, less than 65 wt.%, less than 60 wt.% or less than 55 wt.% of the glycol.

In preferred embodiments of the invention, the glycol is selected from monoethylene glycol, monopropylene glycol, and combinations thereof. In such embodiments, it is preferred that the total amount of glycols different from monoethylene glycol and monopropylene glycol, in particular the total amount of glycerol present in the composition is less than 5 wt.% (by total weight of the composition), preferably less than 1 wt.%, more preferably less than 0.1 wt.%, most preferably about 0 wt.%. In embodiments the composition is essentially free of glycerol. In particular embodiments of the invention, the low glycerol embodiments as described herein are provided wherein the short-chain organic carboxylic acid or salt thereof is selected from the group consisting of C₃ organic carboxylic acids or salts thereof as described herein, preferably propionic acid or a salt thereof.

### Short-chain organic carboxylic acid or salt thereof

In highly preferred embodiments of the invention the compositions described herein are provided wherein the short-chain organic carboxylic acids or salts thereof described herein are provided in the form of a salt consisting of the carboxylate anion and a cationic counterion. The cationic counterion is preferably selected from the group consisting of an earth alkali metal cation, an alkali metal cation, an ammonium cation or combinations thereof, more preferably an alkali metal cation, most preferably sodium or potassium or combinations thereof. In embodiments of the invention the ammonium cation is a quaternary ammonium cation represented by the formula (NRR'R"R‴)⁺ wherein R, R', R" and R‴ are independently selected from the group of branched or straight C₁-C₆ alkyls and branched or straight C₁-C₆ hydroxyalkyls, preferably from methyl, ethyl, n-propyl and isopropyl. In embodiments of the invention the ammonium cation is a tertiary amine cation represented by the formula (HNRR'R")⁺ wherein R, R' and R" are independently selected from the group of branched or straight C₁-C₆ alkyls and branched or straight C₁-C₆ hydroxyalkyls, preferably from methyl, ethyl, n-propyl and isopropyl. In embodiments of the invention the ammonium cation is a secondary amine cation represented by the formula (H₂NRR')⁺ wherein R, and R' are independently selected from the group of branched or straight C₁-C₆ alkyls and branched or straight C₁-C₆ hydroxyalkyls, preferably from methyl, ethyl, n-propyl and isopropyl.

If the short-chain organic carboxylic acid or salt thereof is employed in the form of a salt, the amount of organic carboxylic acid or salt thereof as used in this document refers to the amount of organic carboxylate anion and the cationic counterion (i.e. inclusive of the weight of the cationic counterion).

In embodiments of the invention the C₂ organic carboxylic acid or salt thereof is selected from the group consisting of acetic acid, oxalic acid, glycolic acid, glyoxylic acid or a salt thereof, or combinations thereof, more preferably potassium acetate or sodium acetate, most preferably potassium acetate.

In embodiments of the invention the C₃ organic carboxylic acid or salt thereof is selected from the group consisting of propionic acid, acrylic acid, propiolic acid, malonic acid, tatronic acid, mesoxalic acid, dihydroxymalonic acid, pyruvic acid, lactic acid, hydracrylic acid, glyceric acid, glycidic acid, 2-aminopropanoic acid or a salt thereof, or combinations thereof; preferably the C₃ organic carboxylic acid or salt thereof is selected from the group consisting of propionic acid or lactic acid and combinations thereof; more preferably the C₃ organic carboxylic acid or salt thereof is selected from the group consisting of propionic acid or a salt thereof; more preferably the C₃ organic carboxylic acid or salt thereof is selected from potassium propionate or sodium propionate; most preferably the C₃ organic carboxylic acid or salt thereof is selected from potassium propionate.

In preferred embodiments the short-chain organic carboxylic acid or salt thereof is a C₃ organic carboxylic acid or a salt thereof as described herein.

In preferred embodiments the short-chain organic carboxylic acid or salt thereof is a C₂ organic carboxylic acid or a salt thereof as described herein. In embodiments of the invention a composition as described herein is provided, wherein the composition comprises more than 4 wt.% (by total weight of the composition) of the short-chain organic carboxylic acid or salt thereof, more than 5 wt.%, more than 6 wt.%, more than 7 wt.%, more than 8 wt.%, more than 9 wt.%.

In embodiments of the invention a composition as described herein is provided, wherein the composition comprises less than 5 wt.% (by total weight of the composition) of the short-chain organic carboxylic acid or salt thereof

### Combination glycol and short-chain organic carboxylic acid or salt thereof

In embodiments of the invention a composition as described herein is provided, wherein the combined amount of the glycol and the short-chain organic carboxylic acid or salt thereof is more than 16 wt.% (by total weight of the composition), more than 17 wt.%, more than 18 wt.%, more than 19 wt.%, more than 20 wt.%, more than 25 wt.%, more than 30 wt.%, more than 35 wt.%, more than 40 wt.% or more than 45 wt.%.

In preferred embodiments of the invention a composition as described herein is provided, wherein the combined amount of the glycol and the short-chain organic carboxylic acid or salt thereof is more than 30 wt.% (by total weight of the composition), preferably more than 35 wt.%, preferably more than 40 wt.%.

In embodiments of the invention a composition as described herein is provided, wherein the combined amount of the glycol and the short-chain organic carboxylic acid or salt thereof is less than 90 wt.% (by total weight of the composition), preferably less than 80 wt.%, preferably less than 70 wt.%.

In highly preferred embodiments of the invention, a composition as described herein is provided, wherein the combined amount of the glycol and the short-chain organic carboxylic acid or salt thereof is in the range of 30-70 wt.% (by total weight of the composition), preferably in the range of 35-65 wt.%, more preferably in the range of 40-60 wt.%.

In embodiments of the invention a composition as described herein is provided, wherein the composition comprises more than 5 wt.% (by combined weight of the glycol and the short-chain organic carboxylate) of the short-chain organic carboxylate, more than 6 wt.%, more than 7 wt.%, more than 8 wt.%, more than 9 wt.%, more than 10 wt.%, more than 11 wt.%, more than 12 wt.%, more than 13 wt.%, more than 14 wt.%, more than 15 wt.%, more than 16 wt.%, more than 17 wt.%, more than 18 wt.%, more than 19 wt.%, more than 20 wt.%, more than 25 wt.%, more than 30 wt.%, or more than 35 wt.% of the short-chain organic carboxylic acid or salt thereof.

In preferred embodiments of the invention a composition as described herein is provided, wherein the composition comprises more than 6 wt.% (by combined weight of the glycol and the short-chain organic carboxylate) of the short-chain organic carboxylic acid or salt thereof, preferably more than 30 wt.%.

As is illustrated in the appended examples and explained herein before, the inventors have surprisingly found that a glycol based composition comprising a short-chain organic carboxylic acid or salt thereof exhibits a sudden, non-linear increase in corrosion inhibition upon increasing the concentration of short-chain organic carboxylic acid or salt thereof. However, the present inventors have also found that extremely high proportions of short-chain organic carboxylic acid to glycol such as may be employed in particular de-icing fluids are not necessary to obtain the improved corrosion effect. Hence, in embodiments of the invention a composition as described herein is provided, wherein the composition comprises less than 50 wt.% (by combined weight of the glycol and the short-chain organic carboxylate) of the short-chain organic carboxylate, less than 48 wt.%, less than 46 wt.%, less than 44 wt.%, less than 42 wt.%, less than 40 wt.%, less than 38 wt.%, less than 36 wt.%, less than 34 wt.%, less than 32 wt.%, less than 30 wt.%, less than 28 wt.%, less than 26 wt.%, less than 24 wt.%, less than 22 wt.%, less than 20 wt.%, less than 18 wt.%, less than 16 wt.%, or less than 14 wt.% of the short-chain organic carboxylic acid or salt thereof.

In preferred embodiments of the invention a composition as described herein is provided, wherein the composition comprises less than 50 wt.% (by combined weight of the glycol and the short-chain organic carboxylate) of the short-chain organic carboxylic acid or salt thereof, preferably less than 40 wt.%.

In highly preferred embodiments of the invention a composition as described herein is provided, wherein the composition comprises 6-48 wt.% (by combined weight of the glycol and the short-chain organic carboxylate) of the short-chain organic carboxylic acid or salt thereof, preferably 7-45 wt.%, more preferably 7-40 wt.%.

### Long-chain organic carboxylic acids

In accordance with the invention the composition as described herein is further comprises a long-chain organic carboxylic acid corrosion inhibitor selected from the group consisting of C₆-C₁₆ organic carboxylic acids or salts thereof, preferably C₆-C₁₁ organic carboxylic acids or salts thereof. Preferred C₆-C₁₆ organic carboxylic acids include hexanoic acid, heptanoic acid, isoheptanoic acid, octanoic acid, 2-ethylhexanoic acid, 3,5,5-trimethylhexanoic acid, nonanoic acid, isononanoic acid, decanoic acid, undecanoic acid, dodecanoic acid, neodecanoic acid, cyclohexylbutyl acid, tridecanoic acid, tetradecanoic acid, pentadecanoic acid, hexadecanoic acid, adipic acid, pimelic acid, suberic acid, azelaic acid, sebacic acid and salts thereof.

In certain embodiments of the invention a composition as described herein is provided, wherein the composition further comprises a high carboxylic acid corrosion inhibitor selected from the group consisting of
- C₆-C₉ aliphatic monocarboxylic acids and salts thereof, preferably hexanoic acid, heptanoic acid, isoheptanoic acid, octanoic acid, 2-ethylhexaonoic acid, 3,5,5-trimethylhexanoic acid, nonanoic acid and salts thereof;
- C₆-C₁₂ aliphatic dicarboxylic acids and salts thereof, preferably adipic acid, pimelic acid, suberic acid, azelaic acid, sebacic acid, undecanedioic acid, dodecanedioic acid and salts thereof;
- C₆-C₁₁ aromatic monocarboxylic acids and salts thereof; preferably benzoic acid, salicyclic acid, cinnamic acid, p-hydroxybenzoic acid, gallic acid, vanillic acid, syringic acid, transcinnamic acid, p-coumaric acid, caffeic acid, ferulic acid and salts thereof
- C₆-C₁₄ aromatic dicarboxylic acids and salts thereof, preferably phthalic acid, isophthalic acid, terephthalic acid, diphenic acid, 2,6-naphthalenedicarboxylic acid and salts thereof.
Without wishing to be bound by any theory, the present inventors believe these corrosion inhibitors generally do not exhibit any solubility problems at the concentrations commonly employed in glycolbased heat-transfer fluids.

In certain embodiments of the invention a composition as described herein is provided, wherein the composition further comprises a long-chain organic carboxylic acid corrosion inhibitor selected from the group consisting of C₆-C₁₆ aliphatic carboxylic acids and salts thereof, preferably C₆-C₁₆ aliphatic dicarboxylic acids and salts thereof, preferably C₈-C₁₂ aliphatic dicarboxylic acids and salts thereof, most preferably C₈-C₁₀ aliphatic dicarboxylic acids and salts thereof.

In embodiments of the invention the long-chain organic carboxylic acid corrosion inhibitors described herein are provided in the form of a salt consisting of the carboxylate anion and a cationic counterion. The cationic counterion is preferably selected from the group consisting of an earth alkali metal cation, an alkali metal cation, an ammonium cation or combinations thereof, more preferably an alkali metal cation, most preferably sodium or potassium or combinations thereof. In embodiments of the invention the ammonium cation is a quaternary ammonium cation represented by the formula (NRR'R"R‴)⁺ wherein R, R', R" and R‴ are independently selected from the group of branched or straight C₁-C₆ alkyls and branched or straight C₁-C₆ hydroxyalkyls, preferably from methyl, ethyl, n-propyl and isopropyl. In embodiments of the invention the ammonium cation is a tertiary amine cation represented by the formula (HNRR'R")⁺ wherein R, R' and R" are independently selected from the group of branched or straight C₁-C₆ alkyls and branched or straight C₁-C₆ hydroxyalkyls, preferably from methyl, ethyl, n-propyl and isopropyl. In embodiments of the invention the ammonium cation is a secondary amine cation represented by the formula (H₂NRR')⁺ wherein R, and R' are independently selected from the group of branched or straight C₁-C₆ alkyls and branched or straight C₁-C₆ hydroxyalkyls, preferably from methyl, ethyl, n-propyl and isopropyl. If the long-chain organic carboxylic acid or salt thereof is employed in the form of a salt, the amount of long-chain organic carboxylic acid or salt thereof as used in this document refers to the amount of organic carboxylate anion and the cationic counterion (i.e. inclusive of the weight of the cationic counterion).

In preferred embodiments of the invention a composition as described herein is provided, wherein the composition further comprises more than 0.001 wt.% (by total weight of the composition) of the long-chain organic carboxylic acid corrosion inhibitor described herein, preferably more than 0.01 wt.%, preferably more than 0.1 wt.% of the long-chain organic carboxylic acid corrosion inhibitor.

In certain embodiments of the invention a composition as described herein is provided, wherein the composition comprises less than 5 wt.% (by total weight of the composition) of the long-chain organic carboxylic acid corrosion inhibitor described herein, preferably less than 4 wt.%, preferably less than 3 wt.%, preferably less than 2 wt.%, preferably less than 1 wt.% of the long-chain organic carboxylic acid corrosion inhibitor.

In preferred embodiments of the invention a composition as described herein is provided, comprising the long-chain organic carboxylic acid corrosion inhibitor described herein in an amount within the range of 0.01-5 wt.% (by total weight of the composition), preferably in the range of 0.01-2 wt.%, preferably in the range of 0.01-1 wt.%.

In certain embodiments of the invention a composition as described herein is provided, wherein the composition comprises less than 1 wt. % (by total weight of the composition) C₆-C₁₆ aliphatic carboxylic acid and salts thereof, preferably less than 0.1 wt.%, preferably less than 0.01 wt.%, more preferably less than 0.001 wt.%.

### Corrosion inhibition

In accordance with the invention, the composition as described herein exhibits an aluminium pitting corrosion potential of more than 2500 mV when determined by rapid cyclic potentiokinetic polarization scanning (RCP), preferably employing an AlMgSi0.5 alloy working electrode.

In highly preferred embodiments of the invention, a composition as described herein is provided exhibiting an aluminium pitting corrosion potential of more than 2500 mV when determined in accordance with the method described in CEBELCOR (Centre Belge d'Etude de la Corrosion) publications Rapports Techniques, vol. 147, R.T. 272 (August 1984).

In highly preferred embodiments of the invention, a composition as described herein is provided exhibiting an aluminium pitting corrosion potential of more than 2500 mV when determined by altering the potential of a rod shaped, epoxy embedded, stagnant aluminum working electrode (alloy AlMgSi0.5) having a polished (using 600 grit polishing silicon-carbide paper) working surface of 0.5 cm² with a scan rate of 0.5 mV/s in steps of 0.5mV versus a solid platinum auxiliary electrode (ref. 6.0330.0040, supplier Metroohm) while submerged in 100 grams of test liquid and employing a solid silver reference electrode (ref. 6.0331.010, supplier Methrohom); recording the density of current flowing between the working and auxilary electrode as a function of potential difference employing a potentiostat (VeraSTAT; Ametek^{®} Scientifc Instruments); and identifying the pitting corrosion potential Ep by a sudden exponential increase in current density.

As will be understood by the skilled person, and as shown in the appended examples, depending on the presence and the amount of other corrosion inhibitors, the minimum amount of low carboxylic acid or salt thereof required to attain an aluminium pitting corrosion potential of more than 2500 mV when determined by rapid cyclic potentiokinetic polarization scanning (RCP) will vary. It is within the routine capabilities of the skilled person, in light of this disclosure, to formulate compositions exhibiting an aluminium pitting corrosion potential corrosion of more than 2500 mV when determined by rapid cyclic potentiokinetic polarization scanning (RCP).

### Additives

In certain embodiments of the invention the composition as defined herein further comprises one or more additives selected from the group consisting of further corrosion inhibitors, antioxidants, anti-wear agents, surfactants and/or antifoam agents. In this context, further corrosion inhibitors should be interpreted to mean corrosion inhibitors other than the low and long-chain organic carboxylic acids and salts thereof described herein. Preferred further corrosion inhibitors are selected from the group consisting of inorganic corrosion inhibitors, phosphonate corrosion inhibitors, azole corrosion inhibitors and thiazole corrosion inhibitors.

In certain embodiments of the invention the composition further comprises more than 0.001 wt.% (by total weight of the composition) of said additives, preferably more than 0.01 wt.%, preferably more than 0.1 wt.%.

In preferred embodiments the composition of the invention further comprises one or more additives selected from the group consisting of thiazoles, triazoles, polyolefins, polyalkylene oxides, silicon oils, mineral oils, silicates, molybdates, nitrates, nitrites, phosphonates and phosphates. In preferred embodiments the composition of the invention further comprises one or more of said additives in an amount within the range of 0.001-10 wt.% (by total weight of the composition), preferably 0.01-5 wt.%.

In preferred embodiments of the invention, a composition as defined herein is provided, wherein the composition further comprises a triazole, a thiazole or a combination thereof, preferably an aromatic triazole, an aromatic thiazole or a combination thereof. In preferred embodiments of the invention, a composition as defined herein is provided, wherein the composition further comprises a corrosion inhibitor in the form of one or more triazoles selected from the group consisting of tolyltriazole, benzotriazole or combinations thereof.

In embodiments of the invention, a composition as defined herein is provided, wherein the composition comprises the triazole or thiazole in an amount of more than 0.001 wt.% (by total weight of the composition), preferably more than 0.01 wt.%, preferably more than 0.1 wt.% and/or less than 3 wt.%, preferably less than 1 wt.%, preferably less than 0.35 wt.%.

In embodiments of the invention, a composition as defined herein is provided, wherein the composition further comprises a defoaming agent. Preferably, the defoaming agent is selected from the group consisting of a polyolefin, a polyalkylene oxide, a silicon polymer (such as a 3D silicon polymer) or a silicon oil.

In embodiments of the invention, a composition as defined herein is provided, wherein the composition further comprises the defoaming agent in an amount of more than 0.001 wt.% (by total weight of the composition), preferably more than 0.005 wt.%, preferably more than 0.01 wt.% and/or less than 1 wt.%, preferably less than 0.25 wt.%, preferably less than 0.1 wt.%.

In embodiments of the invention, a composition as defined herein is provided, wherein the composition further comprises a corrosion inhibitor in the form of a molybdate, preferably an inorganic molybdate in an amount of more than 1 ppm (by total weight of the composition) molybdate, preferably more than 10 ppm, preferably more than 100 ppm molybdate and/or less than 10000 ppm, preferably less than 1000 ppm, preferably less than 500 ppm.

If the molybdate is employed in the form of a salt, the amount of molybdate as used in this document refers to the amount of molybdate anion (i.e. exclusive of the weight of the cationic counterion).

In embodiments of the invention, a composition as defined herein is provided, wherein the composition further comprises a nitrate, preferably an inorganic nitrate in an amount of more than 1 ppm (by total weight of the composition) nitrate, preferably more than 10 ppm, preferably more than 100 ppm nitrate and/or less than 10000 ppm, preferably less than 1000 ppm, preferably less than 500 ppm.

If the nitrate is employed in the form of a salt, the amount of nitrate as used in this document refers to the amount of nitrate anion (i.e. exclusive of the weight of the cationic counterion).

In embodiments of the invention, a composition as defined herein is provided, wherein the composition further comprises a nitrite, preferably an inorganic nitrite in an amount of more than 1 ppm (by total weight of the composition) nitrite, preferably more than 10 ppm, preferably more than 100 ppm nitrite and/or less than 10000 ppm, preferably less than 1000 ppm, preferably less than 500 ppm.

If the nitrite is employed in the form of a salt, the amount of nitrite as used in this document refers to the amount of nitrite anion (i.e exclusive of the weight of the cationic counterion).

In embodiments of the invention, a composition as defined herein is provided, wherein the composition further comprises a phosphonate, preferably an inorganic phosphonate in an amount of more than 10 ppm (by total weight of the composition) phosphonate, preferably more than 250 ppm, preferably more than 1000 ppm phosphonate and/or less than 10000 ppm, preferably less than 5000 ppm, preferably less than 2500 ppm.

If the phosphonate is employed in the form of a salt, the amount of phosphonate as used in this document refers to the amount of phosphonate anion (i.e. exclusive of the weight of the cationic counterion).

In embodiments of the invention, a composition as defined herein is provided, wherein the composition further comprises a corrosion inhibitor in the form of a phosphate, preferably an inorganic phosphate in an amount of more than 10 ppm (by total weight of the composition) phosphate, preferably more than 250 ppm, preferably more than 1000 ppm phosphate and/or less than 10000 ppm, preferably less than 5000 ppm, preferably less than 2500 ppm.

If the phosphate is employed in the form of a salt, the amount of phosphate as used in this document refers to the amount of phosphate anion (i.e. exclusive of the weight of the cationic counterion).

In embodiments of the invention, a composition as defined herein is provided, wherein the composition further comprises a corrosion inhibitor in the form of a silicate, preferably an inorganic silicate, preferably sodium metasilicate in an amount more than 1 ppm Si (by total weight of the composition), preferably more than 10 ppm Si, most preferably more than 100 ppm Si and/or less than 10000 ppm, preferably less than 1000 ppm, preferably less than 500 ppm.

In embodiments of the invention, a composition as defined herein is provided, wherein the composition further comprises an antioxidant. Preferably, the antioxidant is selected from the group consisting of phenols, such as 2,6 di-t-butyl methylphenol and 4,4'-methylene-bis(2,6-di-t-butylphenol); aromatic amines, such as p,p-dioctylphenylamine, monooctyldiphenylamine, phenothiazine, 3,7-dioctylphenothiazine, phenyl-1-naphthylamine, phenyl-2-naphthylamine, alkylphenyl-1-naphthatalamines and alkyl-phenyl-2-naphthal-amines, as well as sulphur containing compounds, e.g. dithiophosphates, phosphites, sulphides and dithio metal salts, such as benzothiazole, tin-dialkyldithiophosphates and zinc diaryldithiophosphates.

In embodiments of the invention, a composition as defined herein is provided, wherein the composition further comprises the antioxidant in an amount more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a composition as defined herein is provided, wherein the composition further comprises an antiwear agent. Preferably, the antiwear agent is selected from the group consisting of phosphate esters, phosphites, thiophosphites, e.g. zinc dialkyl dithiophosphates, zinc diaryldithiophosphates, tricresyl phosphates, chlorinated waxes, sulphurised fats and olefins, such as thiodipropionic esters, dialkyl sulphides, dialkyl polysulphides, alkylmercaptanes, dibenzothiophenes and 2,2'-dithiobis(benzothiazole); organic lead compounds, fatty acids, halogen substituted organosilicon compounds, and halogen-substituted phosphorus compounds.

In embodiments of the invention, a composition as defined herein is provided, wherein the composition further comprises the antiwear agent in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a composition as defined herein is provided, wherein the composition further comprises a surfactant. Preferably, the surfactant is selected from the group consisting of anionic surfactants, such as anionic surfactants which are the salt of a compound represented by R-X; wherein X represents a sulfate group, a phosphate group, a sulfonate group, or a carboxylate group, preferably a sulfate group; and wherein R is selected from:
- branched or straight chain C₅-C₂₄ alkyl groups;
- branched or straight chain mono-unsaturated C₅-C₂₄ alkenyl groups;
- branched or straight chain poly-unsaturated C₅-C₂₄ alkenyl groups;
- alkylbenzene groups comprising a C₈-C₁₅ alkyl;
- alkenylbenzene groups comprising a C₈-C₁₅ alkenyl;
- alkylnaphthalene groups comprising a C₃-C₁₅ alkyl;
- alkenylnaphthalene groups comprising a C₃-C₁₅ alkenyl;
- alkylphenol groups comprising a C₈-C₁₅ alkyl; and
- alkenylphenol groups comprising a C₈-C₁₅ alkenyl.

In embodiments of the invention, a composition as defined herein is provided, wherein the composition further comprises the surfactant in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.
In embodiments of the invention, a composition as defined herein is provided, wherein the composition further comprises a scale inhibitor. Preferably, the scale inhibitor is selected from the group consisting of chelants, threshold precipitation inhibitors or combinations thereof. In embodiments of the invention, a composition as defined herein is provided, wherein the composition further comprises a scale inhibtor which is a chelant selected from the group consisting of ethylenediaminetetraacetic acid (EDTA), diethylenetriaminepentaacetic acid (DTPA), citric acid, and gluconic acid. In embodiments of the invention, a composition as defined herein is provided, wherein the composition further comprises a scale inhibitor which is a threshold precipitation inhibitor selected from the group consisting of polyphosphates (e.g. sodium triphosphate or sodium hexametaphosphate ); phosphonates (e.g. aminotrimethylene phosphonic acid (ATMP), ethylenediaminetetramethylene phosphonic acid (EDTMP), diethylenetriaminepentamethylene phosphonic acid (DETPMP), pentaethylenehexamineoctakismethylene phosphonic acid (PEHOMP), 1-hydroxyethylidene-1,1-diphosphonic acid (HEDP), 2-phosphonobutane-1,2,4-tricarboxylic acid (2-PBTCA), polyvinyl phosphonic acid (PPA), phosphino-carboxylic acids (PCA) such as poly(phosphino-acrylic acid) (PPCA) or sulfonated phosphino-carboxylic acid (SPOCA)); polycarboxylic acids and their derivatives (e.g. polymers of maleic anhydride, of maleic acid, of acrylic acid or of methacrylic acid; copolymers of said polymers employing a further monomer such as acrylamide, vinyl sulfonic acid, sulfonated styrene, and itaconic acid; polymers of epoxycarboxylic acids such as polyepoxysuccinic acid or polymers of amino acids such as polyaspartic acid. In embodiments of the invention, a composition as defined herein is provided, wherein the composition further comprises the scale inhibitor in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

As will be understood by the skilled person, depending on (for example) the intended application, the compositions in accordance with the invention may be formulated and used at various concentrations. Hence, the invention is not particularly limited by the maximum concentration of the glycol or the short-chain organic carboxylic acid, or by the concentration of the other additives described herein. Thus, depending on the envisaged application, the compositions described herein may be suitable for use as is, or may require dilution by base fluid before use. However, the present inventors have found that it is particularly advantageous to provide the compositions of the invention in the form of a ready-to-use composition which may be suitable for use as a combustion engine coolant or in the form of a concentrate which is suitable to prepare said ready-to-use composition.

### Ready-to-use composition

In a highly preferred embodiment of the invention, the composition as described herein is provided in the form of a ready-to-use composition wherein the composition further comprises water and wherein
- the combined amount of the glycol and the short-chain organic carboxylic acid or salt thereof is in the range of 30-70 wt.% (by total weight of the composition), preferably in the range of 35-65 wt.%, more preferably in the range of 40-60 wt.%; and
- the combined amount of water, the glycol and the short-chain organic carboxylic acid or salt thereof is more than 90 wt.% (by total weight of the composition), preferably more than 95 wt.%, preferably more than 98 wt.%, most preferably more than 99 wt.%.

In preferred embodiments of the invention the ready-to-use composition is provided, wherein the ready-to-use composition comprises more than 30 wt.% (by total weight of the composition) water, such as more than 35 wt.%, more than 40 wt.%, more than 45 wt.%, more than 50 wt.%, more than 55 wt.%, more than 60 wt.%, or more than 65 wt.%.

### Preferred combination embodiments - ready to use

Hence, in highly preferred embodiments of the invention, a composition is provided comprising:
- water
- more than 5 wt.% (by total weight of the composition) of a glycol selected from the group consisting of monoethylene glycol, monopropylene glycol, 1,3-propanediol, glycerol or combinations thereof; and
- more than 2 wt.% (by total weight of the composition) of a short-chain organic carboxylic acid or salt thereof selected from the group consisting of C₂ organic carboxylic acids or salts thereof, C₃ organic carboxylic acids or salts thereof and combinations thereof;

wherein the combined amount of the glycol and the short-chain organic carboxylic acid or salt thereof is in the range of 30-70 wt.% (by total weight of the composition), preferably in the range of 35-65 wt.%, more preferably in the range of 40-60 wt.%;
wherein the combined amount of water, the glycol and the short-chain organic carboxylic acid or salt thereof is more than 95 wt.% (by total weight of the composition), preferably more than 98 wt.%, most preferably more than 99 wt.%;
wherein the glycol is preferably selected from monoethylene glycol, monopropylene glycol, and combinations thereof;
wherein the composition comprises less than 10 wt.% (by total weight of the composition) of the short-chain organic carboxylic acid or salt thereof;
wherein the composition exhibits an aluminium pitting corrosion potential of more than 2500 mV when determined by rapid cyclic potentiokinetic polarization scanning (RCP), preferably employing an AlMgSi0.5 alloy working electrode; and
wherein the composition further comprises a long-chain organic carboxylic acid corrosion inhibitor selected from the group consisting of C6-C16 organic carboxylic acids or salts thereof, preferably C6-C11 organic carboxylic acids or salts thereof. In highly preferred embodiments, the composition is provided comprising more than 6 wt.% (by combined weight of the glycol and the short-chain organic carboxylate) of the short-chain organic carboxylic acid or salt thereof.

In preferred embodiments of the invention, a composition is provided comprising:
- water
- more than 5 wt.% (by total weight of the composition) of a glycol selected from the group consisting of monoethylene glycol, monopropylene glycol, 1,3-propanediol, glycerol or combinations thereof; and
- more than 2 wt.% (by total weight of the composition), more preferably more than 10 wt.% of a C₃ organic carboxylic acid or a salt thereof, preferably propionic acid or a salt thereof, more preferably potassium propionate;

wherein the combined amount of the glycol and the short-chain organic carboxylic acid or salt thereof is in the range of 30-70 wt.% (by total weight of the composition), preferably in the range of 35-65 wt.%, more preferably in the range of 40-60 wt.%;
wherein the combined amount of water, the glycol and the C₃ organic carboxylic acid or a salt thereof is more than 95 wt.% (by total weight of the composition), preferably more than 98 wt.%, most preferably more than 99 wt.%;
wherein the glycol is preferably selected from monoethylene glycol, monopropylene glycol, and combinations thereof;
wherein the composition comprises less than 10 wt.% (by total weight of the composition) of the short-chain organic carboxylic acid or salt thereof;
wherein the composition exhibits an aluminium pitting corrosion potential of more than 2500 mV when determined by rapid cyclic potentiokinetic polarization scanning (RCP), preferably employing an AlMgSi0.5 alloy working electrode; and
wherein the composition further comprises a long-chain organic carboxylic acid corrosion inhibitor selected from the group consisting of C6-C16 organic carboxylic acids or salts thereof, preferably C6-C11 organic carboxylic acids or salts thereof. In highly preferred embodiments, the composition is provided comprising more than 6 wt.% (by combined weight of the glycol and the short-chain organic carboxylate) of the C₃ organic carboxylic acid or a salt thereof.

In preferred embodiments of the invention, a composition is provided comprising:
- water
- more than 5 wt.% (by total weight of the composition) of a glycol selected from the group consisting of monoethylene glycol, monopropylene glycol, 1,3-propanediol, glycerol or combinations thereof; and
- more than 2 wt.% (by total weight of the composition), more preferably more than 10 wt.%, more preferably more than 15 wt.% of a C₂ organic carboxylic acid or a salt thereof, preferably acetic acid or a salt thereof, more preferably potassium acetate;

wherein the combined amount of the glycol and the short-chain organic carboxylic acid or salt thereof is in the range of 30-70 wt.% (by total weight of the composition), preferably in the range of 35-65 wt.%, more preferably in the range of 40-60 wt.%;
wherein the combined amount of water, the glycol the C₂ organic carboxylic acid or a salt thereof is more than 95 wt.% (by total weight of the composition), preferably more than 98 wt.%, most preferably more than 99 wt.%;
wherein the glycol is preferably selected from monoethylene glycol, monopropylene glycol, and combinations thereof;
wherein the composition comprises less than 10 wt.% (by total weight of the composition) of the short-chain organic carboxylic acid or salt thereof;
wherein the composition exhibits an aluminium pitting corrosion potential of more than 2500 mV when determined by rapid cyclic potentiokinetic polarization scanning (RCP), preferably employing an AlMgSi0.5 alloy working electrode; and
wherein the composition further comprises a long-chain organic carboxylic acid corrosion inhibitor selected from the group consisting of C6-C16 organic carboxylic acids or salts thereof, preferably C6-C11 organic carboxylic acids or salts thereof. In highly preferred embodiments, the composition is provided comprising more than 6 wt.% (by combined weight of the glycol and the short-chain organic carboxylate) of the C₂ organic carboxylic acid or a salt thereof.

### pH

In preferred embodiments of the invention, a composition, preferably a ready-to-use composition as defined herein is provided, wherein the composition has a pH between 7.5 and 10.

### Concentrate

In another aspect of the invention there is provided a composition as defined herein, in the form of a concentrate suitable to prepare the ready-to-use composition described herein before.

In preferred embodiments, the concentrate is suitable to prepare the ready-to-use composition described herein by addition of water and/or alcohol; preferably by addition of water, monoethylene glycol, monopropylene glycol, 1,3-propanediol and/or glycerol; most preferably by addition of water. In highly preferred embodiments, the concentrate is suitable to prepare the ready-to-use composition solely by addition of water and/or alcohol; preferably solely by addition of water, monoethylene glycol, monopropylene glycol, 1,3-propanediol and/or glycerol; most preferably solely by addition of water (i.e. no other ingredients need to be added in order to prepare the ready-to-use composition described herein from the concentrate).

In certain embodiments of the invention the concentrate comprises more than 70 wt.% (by total weight of the concentrate) of a polyalcohol, preferably a polyalcohol selected from the group consisting of monoethylene glycol, monopropylene glycol, 1,3-propanediol and glycerol.

### Methods of preparation

In another aspect of the disclosure which is not claimed there is provided a method to prepare a composition as defined herein, comprising the steps of:
(i) providing a short-chain organic carboxylic acid or salt thereof as described herein;
(ii) providing a glycol as described herein;
(iii) optionally providing a long-chain organic carboxylic acid or salt thereof as described herein;
(iv) optionally providing further additives as defined herein; and
(v) combining the short-chain organic carboxylic acid or salt thereof of step (i) with the glycol of step (ii), the optional high carboxylic acid or salt thereof of step (iii) and the optional further additives of step (iv) to obtain the composition.

In accordance with the disclosure the order of addition of the compounds is not particularly limited.

In another aspect of the disclosure which is not claimed there is provided a method to prepare a ready-to-use composition as defined herein, comprising the steps of:
(i) providing a concentrate as defined herein earlier;
(ii) providing water, alcohol or a mixture thereof;
(iii) optionally providing further additives as defined herein earlier; and
(iv) combining the concentrate of step (i) with the water, alcohol or a mixture thereof of step (ii) and the optional further additives of step (iii) to obtain the ready-to-use composition.

In preferred embodiments there is provided a method to prepare a ready-to-use composition as defined herein, consisting of the following steps:
(i) providing a concentrate as defined herein earlier;
(ii) providing water, alcohol or a mixture thereof;
(iii) combining the concentrate of step (i) with the water, alcohol or a mixture thereof of step (ii) to obtain the ready-to-use composition.

In highly preferred embodiments the alcohol of step (ii) is selected from the group consisting of monoethylene glycol, monopropylene glycol, 1,3-propanediol, glycerol and combinations thereof. In preferred embodiments step (ii) consists of providing water.

In preferred embodiments step (ii) comprises providing more than 50 wt.% (by weight of the concentrate) water, alcohol or a mixture thereof, preferably more than 100 wt.%, more than 150 wt.% more than 200 wt.% or more than 350 wt.% water, alcohol or a mixture thereof.

### Uses/Methods

In another aspect of the invention there is provided the use of claim 15.

In another aspect of the disclosure which is not claimed there is provided a method of inhibiting corrosion comprising contacting the composition, preferably the ready-to-use composition provided herein with a metal surface.

In another aspect of the disclosure which is not claimed there is provided a combustion engine, a turbo cooler, an exhaust gas recovery cooler, a brake heat recovery system, a solar system, a fuel cell, an electrical motor, a generator, or electronic equipment comprising the composition, preferably the ready-to-use composition as described herein.

In another aspect of the disclosure which is not claimed there is provided a method of exchanging heat, comprising:
a. generating heat in a system selected from a combustion engine, a turbo cooler, an exhaust gas recovery cooler, a brake heat recovery system, a solar system, a fuel cell, an electrical motor, a generator, a battery, a battery electric vehicle, or electronic equipment, preferably in a combustion engine;
b. contacting a composition as described herein, preferably a ready-to-use composition as described herein with the system of step a;
c. transferring heat from the system to the composition;
d. passing the composition through a heat exchanger; and
e. transferring heat away from the composition.

In another aspect of the disclosure which is not claimed there is provided the use of a short-chain organic carboxylic acid selected from the group consisting of C₂ organic carboxylic acids or salts thereof, C₃ organic carboxylic acids or salts thereof, and combinations thereof, preferably selected from the group consisting of propionic acid and salts thereof, acetic acid and salts thereof, and combinations thereof; for increasing the corrosion inhibition of a composition comprising more than 5 wt.% (by total weight of the composition) of a glycol selected from the group consisting of monoethylene glycol, monopropylene glycol, 1,3-propanediol, glycerol or combinations thereof; preferably for increasing the pitting corrosion potential, most preferably for increasing the pitting corrosion potential of aluminum. In preferred embodiments of the invention there is provided the use of a short-chain organic carboxylic acid selected from the group consisting of C₂ organic carboxylic acids or salts thereof, C₃ organic carboxylic acids or salts thereof, and combinations thereof, preferably selected from the group consisting of propionic acid and salts thereof, acetic acid and salts thereof, and combinations thereof; for increasing the corrosion inhibition of a composition comprising more than 5 wt.% (by total weight of the composition) of a glycol selected from the group consisting of monoethylene glycol, monopropylene glycol, and combinations thereof; preferably for increasing the pitting corrosion potential, most preferably for increasing the pitting corrosion potential of aluminum.

### Examples

All wt.% values in Tables 1-4 are based on the total weight of the composition (unless indicated otherwise). The corrosion inhibitor solution consists of 23 wt.% of a mixture of C₈ and C₁₀ carboxylic acid salts (wherein the wt.% is calculated based on the organic carboxylate anion (i.e. exclusive of the weight of the cationic counterion)) in water. The corrosive water comprises 148 milligram sodium sulphate, 165 milligram sodium chloride, 138 mg sodium hydrogencarbonate and 364 mg calcium chloride dihydrate dissolved in 1 liter water. The pitting corrosion potential is measured through Rapid Cyclic Potentiokinetic Polarization Scanning (RCP) in accordance with the method described in CEBELCOR (Centre Belge d'Etude de la Corrosion) publications Rapports Techniques, vol. 147, R.T. 272 (August 1984) described herein earlier. A higher Ep value indicates a more effective prevention of localized corrosion. Examples A1-A7, A11, A12, B1-B4, C1-C5 and D1-D4 are comparative examples not according to the invention.

**Table 1: monoethylene glycol based samples with potassium propionate**

| **Example** | Monoethylene glycol (wt.%) | Potassium propionate (wt.%) | Potassium propionate (wt.%*) | Corrosion Inhibitor solution (wt.%) | De-ionized water (wt.%) | Corrosive water (wt.%) | Pitting corrosion potential Ep (mV) |
|---|---|---|---|---|---|---|---|
| **A1** | 30 | 0 | 0,0 | 0 | 22,5 | 47,5 | -571 |
| **A2** | 22,5 | 7,5 | 25,0 | 0 | 22,5 | 47,5 | 396 |
| **A3** | 15 | 15,0 | 50,0 | 0 | 22,5 | 47,5 | >2500 |
| **A4** | 7,5 | 22,5 | 75,0 | 0 | 22,5 | 47,5 | >2500 |
| **A5** | 30 | 0 | 0,0 | 3 | 19,5 | 47,5 | -270 |
| **A6** | 30 | 0,8 | 2,4 | 3 | 18,7 | 47,5 | -187 |
| **A7** | 29,3 | 1,5 | 4,9 | 3 | 18,7 | 47,5 | -82 |
| **A9** | 26,3 | 3,7 | 12,5 | 3 | 19,5 | 47,5 | >2500 |
| **A10** | 22,5 | 7,5 | 25,0 | 3 | 19,5 | 47,5 | >2500 |
| **A11** | 15 | 15,0 | 50,0 | 3 | 19,5 | 47,5 | >2500 |
| **A12** | 7,5 | 22,5 | 75,0 | 3 | 19,5 | 47,5 | >2500 |

| | | | | | | | |
|---|---|---|---|---|---|---|---|
| * by combined weight of monoethylene glycol and potassium propionate | | | | | | | |

**Table 2: monopropylene glycol based samples with potassium propionate (B)**

| **Example** | Monopropylene glycol (wt.%) | Potassium propionate (wt.%) | Potassium propionate (wt.%*) | Corrosion Inhibitor solution (wt.%) | De-ionized water (wt.%) | Corrosive water (wt.%) | Pitting corrosion potential (mV) |
|---|---|---|---|---|---|---|---|
| **B1** | 30,0 | 0,0 | 0,0 | 0 | 22,5 | 47,5 | -578 |
| **B2** | 28,5 | 1,5 | 5,0 | 0 | 22,5 | 47,5 | -194 |
| **B3** | 15,0 | 15,0 | 50,0 | 0 | 22,5 | 47,5 | >2500 |
| **B4** | 29,3 | 1,5 | 4,9 | 3 | 18,7 | 47,5 | -157 |
| **B5** | 28,1 | 2,6 | 8,5 | 3 | 18,7 | 47,5 | >2500 |
| **B6** | 22,5 | 7,5 | 25,0 | 3 | 19,5 | 47,5 | >2500 |

| | | | | | | | |
|---|---|---|---|---|---|---|---|
| * by combined weight of monopropylene glycol and potassium propionate | | | | | | | |

**Table 3: glycerol based samples with potassium propionate (C)**

| **Sample** | Glycerol (wt.%) | Potassium propionate (wt.%) | Potassium propionate (wt.%*) | Corrosion Inhibitor solution (wt.%) | De-ionized water (wt.%) | Corrosive water (wt.%) | Pitting corrosion potential (mV) |
|---|---|---|---|---|---|---|---|
| **C1** | 30,0 | 0,0 | 0,0 | 0 | 22,5 | 47,5 | -658 |
| **C2** | 28,5 | 1,5 | 5,0 | 0 | 22,5 | 47,5 | -250 |
| **C3** | 27,4 | 2,6 | 8,7 | 0 | 22,5 | 47,5 | -191 |
| **C4** | 15,0 | 15,0 | 50,0 | 0 | 22,5 | 47,5 | >2500 |
| **C5** | 29,3 | 1,5 | 4,9 | 3 | 18,7 | 47,5 | 752 |
| **C6** | 28,1 | 2,6 | 8,5 | 3 | 18,7 | 47,5 | >2500 |
| **C7** | 22,5 | 7,5 | 25,0 | 3 | 19,5 | 47,5 | >2500 |

| | | | | | | | |
|---|---|---|---|---|---|---|---|
| * by combined weight of glycerol and potassium propionate | | | | | | | |

**Table 4: ethylene glycol based samples with potassium acetate (D)**

| **Sample** | Monoethylene glycol (wt.%) | Potassium acetate (wt.%) | Potassiu m acetate (wt. %*) | Corrosion Inhibitor solution (wt.%) | De-ionized water (wt.%) | Corrosive water (wt.%) | Pitting corrosion potential (mV) |
|---|---|---|---|---|---|---|---|
| **D1** | 38,0 | 2 | 5,0 | 0 | 30 | 30 | 27 |
| **D2** | 35,0 | 5 | 12,5 | 0 | 30 | 30 | 575 |
| **D3** | 30,0 | 10 | 25,0 | 0 | 30 | 30 | 1240 |
| **D4** | 20,0 | 20 | 50,0 | 0 | 30 | 30 | >2500 |

| | | | | | | | |
|---|---|---|---|---|---|---|---|
| * by combined weight of monoethylene glycol and potassium acetate | | | | | | | |

## Claims

1. A composition comprising:
• more than 5 wt.% (by total weight of the composition) of a glycol selected from the group consisting of monoethylene glycol, monopropylene glycol, 1,3-propanediol, glycerol or combinations thereof; and
• more than 2 wt.% (by total weight of the composition) of a short-chain organic carboxylic acid or salt thereof selected from the group consisting of C2 organic carboxylic acids or salts thereof, C3 organic carboxylic acids or salts thereof and combinations thereof;
wherein the combined amount of the glycol and the short-chain organic carboxylic acid or salt thereof is more than 15 wt.% (by total weight of the composition);
wherein the composition exhibits an aluminium pitting corrosion potential of more than 2500 mV when determined by rapid cyclic potentiokinetic polarization scanning (RCP), preferably employing an AlMgSi0.5 alloy working electrode;
wherein the composition further comprises a long-chain organic carboxylic acid corrosion inhibitor selected from the group consisting of C6-C16 organic carboxylic acids or salts thereof, preferably C6-C11 organic carboxylic acids or salts thereof; and wherein the composition comprises less than 10 wt.% (by total weight of the composition) of the short-chain organic carboxylic acid or salt thereof.

2. The composition according to claim 1 comprising more than 6 wt.% (by combined weight of the glycol and the short-chain organic carboxylate) of the short-chain organic carboxylic acid or salt thereof.

3. The composition according to claim 2 comprising more than 30 wt.% (by combined weight of the glycol and the short-chain organic carboxylate) of the short-chain organic carboxylic acid or salt thereof.

4. The composition according to any one of claims 1-3, comprising more than 10 wt.% (by total weight of the composition) of the glycol, preferably more than 20 wt.%, preferably more than 50 wt.%.

5. The composition according to any one of claims 1-4 further comprising water.

6. The composition according to any one of claims 1-5, wherein the short-chain organic carboxylic acid or salt thereof is a C3 organic carboxylic acid or a salt thereof; preferably a C3 organic carboxylic acid or a salt thereof selected from the group consisting of propionic acid or a salt thereof, acrylic acid or a salt thereof, propiolic acid or a salt thereof, malonic acid or a salt thereof, tatronic acid or a salt thereof, mesoxalic acid or a salt thereof, dihydroxymalonic acid or a salt thereof, pyruvic acid or a salt thereof, lactic acid or a salt thereof, hydracrylic acid or a salt thereof, glyceric acid or a salt thereof, glycidic acid or a salt thereof, or combinations thereof; more preferably a C3 organic carboxylic acid or a salt thereof selected from the group consisting of propionic or lactic acid and combinations thereof; more preferably a C3 organic carboxylic acid or a salt thereof selected from the group consisting of propionic acid or a salt thereof; most preferably potassium propionate.

7. The composition according to any one of claims 1-5, wherein the short-chain organic carboxylic acid or salt thereof is a C2 organic acid or a salt thereof, preferably acetic acid or a salt thereof, oxalic acid or a salt thereof, glyoxylic acid or a salt thereof or combinations thereof, most preferably potassium acetate.

8. The composition according to any one of the claims 1-7, wherein the long-chain organic carboxylic acid corrosion inhibitor is selected from the group consisting of
• a C6-C9 aliphatic monocarboxylic acids and salts thereof;
• a C6-C12 aliphatic dicarboxylic acids and salts thereof;
• a C6-C11 aromatic monocarboxylic acids and salts thereof; and
• a C6-C14 aromatic dicarboxylic acids and salts thereof.

9. The composition according to any one of the claims 1-8, wherein the long-chain organic carboxylic acid corrosion inhibitor is selected from the group consisting of C6-C16 aliphatic carboxylic acids and salts thereof, preferably C6-C16 aliphatic dicarboxylic acids and salts thereof, preferably C8-C12 aliphatic dicarboxylic acids and salts thereof, most preferably C8-C10 aliphatic dicarboxylic acids and salts thereof.

10. The composition according to claim 9 comprising less than 0.1 wt.% (by total weight of the composition) C6-C16 organic carboxylic acids or salts thereof, preferably less than 0.01 wt.%.

11. The composition according to any one of claims 1-10 further comprising one or more additives selected from the group consisting of further corrosion inhibitors, antioxidants, antiwear agents, surfactants, scale inhibitors, antifoam agents in an amount within the range 25 of 0.001-10 wt.% (by total weight of the composition), preferably within the range of 0.01-5 wt.%.

12. The composition according to any one of claims 1-11 which is a ready-to-use composition, wherein the composition further comprises water and wherein
• the combined amount of the glycol and the short-chain organic carboxylic acid or salt thereof is in the range of 30-70 wt.% (by total weight of the composition), preferably in the range of 35-65 wt.%, more preferably in the range of 40-60 wt.%; and
• the combined amount of water, the glycol and the short-chain organic carboxylic acid or salt thereof is more than 95 wt.% (by total weight of the composition), preferably more than 98 wt.%, most preferably more than 99 wt.%.

13. The composition according to any one of claims 1-12 which is a concentrate suitable to prepare the ready-to-use composition according to claim 12.

14. The composition according to claim 13 wherein the concentrate is suitable to prepare the ready-to-use composition according to claim 12 by addition of water and/or alcohol, preferably solely by addition of water, monoethylene glycol, monopropylene glycol, 1,3-propanediol and/or glycerol, most preferably solely by addition of water.

15. Use of the composition according to any one of claims 1-14, preferably the ready-to-use composition of claim 12, as a heat-transfer fluid, preferably as a heat-transfer fluid in a combustion engine, a turbo cooler, an exhaust gas recovery cooler, a brake heat recovery system, a solar system, a fuel cell, an electrical motor, a generator, a battery, a battery electric vehicle, or electronic equipment.

## Patentansprüche

1. Zusammensetzung umfassend:
• mehr als 5 Gew.-% (bezogen auf das Gesamtgewicht der Zusammensetzung) eines Glycols ausgewählt aus der Gruppe bestehend aus Monoethylenglycol, Monopropylenglycol, 1,3-Propandiol, Glycerol oder Kombinationen hiervon; und
• mehr als 2 Gew.-% (bezogen auf das Gesamtgewicht der Zusammensetzung) einer kurzkettigen organischen Carbonsäure oder Salze hiervon, ausgewählt aus der Gruppe bestehend aus C2 organischer Carbonsäuren oder Salze hiervon, C3 organische Carbonsäuren oder Salze hiervon und Kombinationen hiervon;
wobei die kombinierte Menge des Glycols und der kurzkettigen organischen Carbonsäure oder Salze hiervon mehr als 15 Gew.-% (bezogen auf das Gesamtgewicht der Zusammensetzung) ist;
wobei die Zusammensetzung ein Aluminiumlochfraßkorrosionspotential von mehr als 2500 mV, wenn mittels schnellem zyklischen potentiokinetischen Polarisations-Scanning (RCP) bestimmt, bevorzugt unter Verwendung einer AlMgSi0,5-Legierungsarbeitselektrode, vorweist; wobei die Zusammensetzung ferner einen langkettigen organischen Carbonsäurekorrosionsinhibitor umfasst, ausgewählt aus der Gruppe bestehend aus C6-C16 organischen Carbonsäuren oder Salze hiervon, bevorzugt C6-C11 organischen Carbonsäuren oder Salze hiervon; und wobei die Zusammensetzung weniger als 10 Gew.-% (bezogen auf das Gesamtgewicht der Zusammensetzung) der kurzkettigen organischen Carbonsäure oder Salze hiervon umfasst.

2. Zusammensetzung nach Anspruch 1, die mehr als 6 Gew.-% (bezogen auf das kombinierte Gewicht des Glycols und des kurzkettigen organischen Carboxylats) der kurzkettigen organischen Carbonsäure oder Salzes davon umfasst.

3. Zusammensetzung nach Anspruch 2, die mehr als 30 Gew.-% (bezogen auf das kombinierte Gewicht des Glycols und des kurzkettigen organischen Carboxylats) der kurzkettigen organischen Carbonsäure oder Salzes davon umfasst.

4. Zusammensetzung nach einem der Ansprüche 1-3, die mehr als 10 Gew.-% (bezogen auf das Gesamtgewicht der Zusammensetzung) des Glycols, bevorzugt mehr als 20 Gew.-%, bevorzugt mehr als 50 Gew.-% umfasst.

5. Zusammensetzung nach einem der Ansprüche 1-4, die ferner Wasser umfasst.

6. Zusammensetzung nach einem der Ansprüche 1-5, wobei die kurzkettige organische Carbonsäure oder Salz davon eine C3 organische Carbonsäure oder ein Salz davon ist; bevorzugt eine C3 organische Carbonsäure oder ein Salz davon ausgewählt aus der Gruppe bestehend aus Propionsäure oder ein Salz davon, Acrylsäure oder ein Salz davon, Propiolsäure oder ein Salz davon, Malonsäure oder ein Salz davon, Tatronsäure oder ein Salz davon, Mesoxalsäure oder ein Salz davon, Dihydroxymalonsäure oder ein Salz davon, Brenztraubensäure oder ein Salz davon, Milchsäure oder ein Salz davon, Hydracrylsäure oder ein Salz davon, Glycerinsäure oder ein Salz davon, Glycidinsäure oder ein Salz davon oder Kombinationen davon; mehr bevorzugt eine C3 organische Carbonsäure oder ein Salz davon ausgewählt aus der Gruppe bestehend aus Propion- oder Milchsäure und Kombinationen hiervon; mehr bevorzugt eine C3 organische Carbonsäure oder ein Salz hiervon ausgewählt aus der Gruppe bestehend aus Propionsäure oder ein Salz hiervon; am meisten bevorzugt Kaliumpropionat.

7. Zusammensetzung nach einem der Ansprüche 1-5, wobei die kurzkettige organische Carbonsäure oder Salz hiervon eine C2 organische Säure oder ein Salz hiervon, bevorzugt Essigsäure oder ein Salz hiervon, Oxalsäure oder ein Salz hiervon, Glyoxylsäure oder ein Salz hiervon oder Kombinationen davon, am bevorzugtesten Kaliumacetat, ist.

8. Zusammensetzung nach einem der Ansprüche 1-7, wobei der langkettige organische Carbonsäurekorrosionsinhibitor ausgewählt ist aus der Gruppe bestehend aus
• einer C6-C9 aliphatische Monocarbonsäuren und Salzen hiervon;
• einer C6-C12 aliphatische Dicarbonsäuren und Salzen hiervon;
• einer C6-C11 aromatische Monocarbonsäuren und Salzen hiervon; und
• einer C6-C14 aromatische Dicarbonsäuren und Salzen hiervon.

9. Zusammensetzung nach einem der Ansprüche 1-8, wobei der langkettige organische Carbonsäurekorrosionsinhibitor ausgewählt ist aus der Gruppe, bestehend aus C6-C16 aliphatischen Carbonsäuren und Salzen hiervon, bevorzugt C6-C16 aliphatischen Dicarbonsäuren und Salzen hiervon, bevorzugt C8-C12 aliphatischer Dicarbonsäuren und Salzen hiervon, am meisten bevorzugt C8-C10 aliphatischen Dicarbonsäuren und Salzen hiervon.

10. Zusammensetzung nach Anspruch 9, die weniger als 0.1 Gew.-% (bezogen auf das Gesamtgewicht der Zusammensetzung) C6-C16 organischer Carbonsäuren oder Salzen hiervon, bevorzugt weniger als 0,01 Gew.-%, umfasst.

11. Zusammensetzung nach einem der Ansprüche 1-10, die ferner ein oder mehrere Additive umfasst, ausgewählt aus der Gruppe, bestehend aus weiteren Korrosionsinhibitoren, Antioxidantien, Antiverschleißmitteln, Tensiden, Kesselsteininhibitoren, Antischaummitteln in einer Menge innerhalb des Bereichs von 0,001-10 Gew.-% (bezogen auf das Gesamtgewicht der Zusammensetzung), bevorzugt im Bereich von 0,01-5 Gew.-%.

12. Zusammensetzung nach einem der Ansprüche 1-11, welche eine gebrauchsfertige Zusammensetzung ist, wobei die Zusammensetzung ferner Wasser umfasst, wobei
• die kombinierte Menge des Glycols und der kurzkettigen organischen Carbonsäure oder Salz hiervon im Bereich von 30-70 Gew.-% (bezogen auf das Gesamtgewicht der Zusammensetzung), bevorzugt im Bereich von 35-65 Gew.-%, mehr bevorzugt im Bereich von 40-60 Gew.-%, ist; und
• die kombinierte Menge von Wasser, des Glycols und der kurzkettigen Carbonsäure oder Salz hiervon mehr als 95 Gew.-% (bezogen auf das Gesamtgewicht der Zusammensetzung), bevorzugt mehr als 98 Gew.-%, am meisten bevorzugt mehr als 99 Gew.-%, ist.

13. Zusammensetzung nach einem der Ansprüche 1-12, welche ein geeignetes Konzentrat ist, um die gebrauchsfertige Zusammensetzung nach Anspruch 12 zuzubereiten.

14. Zusammensetzung nach Anspruch 13, wobei das Konzentrat geeignet ist, um die gebrauchsfertige Zusammensetzung nach Anspruch 12 durch Zugabe von Wasser und/oder Alkohol, bevorzugt ausschließlich unter Zugabe von Wasser, Monoethylenglycol, Monopropyleneglycol, 1,3-Propandiol und/oder Glycerol, am meisten bevorzugt ausschließlich durch Zugabe von Wasser, zuzubereiten.

15. Verwendung der Zusammensetzung nach einem der Ansprüche 1-14, bevorzugt der gebrauchsfertigen Zusammensetzung nach Anspruch 12, als Wärmetransportflüssigkeit, bevorzugt als Wärmetransportflüssigkeit in einem Verbrennungsmotor, einem Turbokühler, einem Abgasrückgewinnungskühler, einem Bremswärmerückgewinnungssystem, einer Solaranlage, einer Brennstoffzelle, einem Elektromotor, einem Generator, einer Batterie, einem batteriebetriebenen Elektrofahrzeug oder einem elektronischen Gerät.

## Revendications

1. Composition comprenant :
• plus de 5 % en poids (du poids total de la composition) d'un glycol choisi dans le groupe constitué par le monoéthylène glycol, le monopropylène glycol, le 1,3-propanediol, le glycérol ou des combinaisons de ceux-ci ; et
• plus de 2 % en poids (du poids total de la composition) d'un acide carboxylique organique à chaîne courte ou d'un sel de celui-ci choisi dans le groupe constitué par les acides carboxyliques organiques en C2 ou leurs sels, les acides carboxyliques organiques en C3 ou leurs sels et des combinaisons de ceux-ci ;
où la quantité combinée du glycol et de l'acide carboxylique organique à chaîne courte ou du sel de celui-ci est supérieure à 15 % en poids (du poids total de la composition) ; où la composition présente un potentiel de corrosion par piqûres de l'aluminium supérieur à 2500 mV lorsqu'il est déterminé par balayage de polarisation potentiocinétique cyclique rapide (RCP), de préférence avec une électrode de travail en alliage AlMgSi0,5 ;
où la composition comprend en outre un inhibiteur de corrosion à base d'acide carboxylique organique à longue chaîne choisi parmi les acides carboxyliques organiques en C6-C16 ou leurs sels, de préférence des acides carboxyliques organiques en C6-C11 ou leurs sels ; et
où la composition comprend moins de 10 % en poids (du poids total de la composition) de l'acide carboxylique organique à courte chaîne ou du sel de celui-ci.

2. Composition selon la revendication 1, comprenant plus de 6 % en poids (du poids combiné du glycol et du carboxylate organique à courte chaîne) de l'acide carboxylique organique à courte chaîne ou du sel de celui-ci.

3. Composition selon la revendication 2, comprenant plus de 30 % en poids (du poids combiné du glycol et du carboxylate organique à chaîne courte) de l'acide carboxylique organique à chaîne courte ou du sel de celui-ci.

4. Composition selon l'une quelconque des revendications 1 à 3, comprenant plus de 10 % en poids (du poids total de la composition) de glycol, de préférence plus de 20 %, de préférence plus de 50 % en poids.

5. Composition selon l'une quelconque des revendications 1 à 4, comprenant en outre de l'eau.

6. Composition selon l'une quelconque des revendications 1 à 5, où l'acide carboxylique organique à chaîne courte ou le sel de celui-ci est un acide carboxylique organique en C3 ou un sel de celui-ci ; de préférence, un acide carboxylique organique en C3 ou un sel de celui-ci choisi dans le groupe constitué par l'acide propionique ou un sel de celui-ci, l'acide acrylique ou un sel de celui-ci, l'acide propiolique ou un sel de celui-ci, l'acide malonique ou un sel de celui-ci, l'acide tatronique ou un sel de celui-ci, l'acide mésoxalique ou un sel de celui-ci, l'acide dihydroxymalonique ou un sel de celui-ci, l'acide pyruvique ou un sel de celui-ci, l'acide lactique ou un sel de celui-ci, l'acide hydracrylique ou un sel de celui-ci, l'acide glycérique ou un sel de celui-ci, l'acide glycidique ou un sel de celui-ci, ou des combinaisons de ceux-ci ; plus préférablement, un acide carboxylique organique en C3 ou un sel de celui-ci, choisi dans le groupe constitué par l'acide propionique ou l'acide lactique et des combinaisons de ceux-ci ; plus préférablement, un acide carboxylique organique en C3 ou un sel de celui-ci, choisi dans le groupe constitué par l'acide propionique ou un sel de celui-ci ; préférentiellement, le propionate de potassium.

7. Composition selon l'une quelconque des revendications 1 à 5, où l'acide carboxylique organique à chaîne courte ou le sel de celui-ci est un acide organique en C2 ou un sel de celui-ci, de préférence l'acide acétique ou un sel de celui-ci, l'acide oxalique ou un sel de celui-ci, l'acide glyoxylique ou un sel de celui-ci, ou des combinaisons de ceux-ci, préférentiellement l'acétate de potassium.

8. Composition selon l'une quelconque des revendications 1 à 7, où l'inhibiteur de corrosion à base d'acide carboxylique organique à longue chaîne est choisi dans le groupe constitué par :
• les acides monocarboxyliques aliphatiques en C6-C9 et leurs sels ;
• les acides dicarboxyliques aliphatiques en C6-C12 et leurs sels ;
• les acides monocarboxyliques aromatiques en C6-C11 et leurs sels ; et
• les acides dicarboxyliques aromatiques en C6-C14 et leurs sels.

9. Composition selon l'une quelconque des revendications 1 à 8, où l'inhibiteur de corrosion à base d'acide carboxylique organique à longue chaîne est choisi dans le groupe constitué par les acides carboxyliques aliphatiques en C6-C16 et leurs sels, de préférence les acides dicarboxyliques aliphatiques en C6-C16 et leurs sels, de préférence les acides dicarboxyliques aliphatiques en C8-C12 et leurs sels, préférentiellement les acides dicarboxyliques aliphatiques en C8-C10 et leurs sels.

10. Composition selon la revendication 9, comprenant moins de 0,1 % en poids (du poids total de la composition) d'acides carboxyliques organiques en C6-C16 ou de leurs sels, de préférence moins de 0,01 % en poids.

11. Composition selon l'une quelconque des revendications 1 à 10, comprenant en outre un ou plusieurs additifs choisis dans le groupe constitué par les inhibiteurs de corrosion, les antioxydants, les agents anti-usure, les tensioactifs, les inhibiteurs d'entartrage et les agents anti-mousse, en une quantité comprise entre 0,001 et 10 % en poids (du poids total de la composition), de préférence entre 0,01 et 5 % en poids.

12. Composition selon l'une quelconque des revendications 1 à 11, qui est une composition prête à l'emploi, où la composition comprend en outre de l'eau et où
• la quantité combinée du glycol et de l'acide carboxylique organique à chaîne courte ou du sel de celui-ci est comprise entre 30 et 70 % en poids (du poids total de la composition), de préférence entre 35 et 65 %, et préférentiellement entre 40 et 60 % en poids ; et
• la quantité combinée d'eau, du glycol et de l'acide carboxylique organique à chaîne courte ou du sel de celui-ci est supérieure à 95 % en poids (du poids total de la composition), de préférence supérieure à 98 %, et plus préférablement supérieure à 99 % en poids.

13. Composition selon l'une quelconque des revendications 1 à 12, qui est un concentré adapté pour la préparation de la composition prête à l'emploi selon la revendication 12.

14. Composition selon la revendication 13, où le concentré est adapté pour la préparation de la composition prête à l'emploi selon la revendication 12 par addition d'eau et/ou d'alcool, de préférence uniquement par addition d'eau, de monoéthylène glycol, de monopropylène glycol, de 1,3-propanediol et/ou de glycérol, préférentiellement uniquement par addition d'eau.

15. Utilisation de la composition selon l'une quelconque des revendications 1 à 14, de préférence de la composition prête à l'emploi selon la revendication 12, comme fluide caloporteur, de préférence comme fluide caloporteur dans un moteur à combustion, un refroidisseur turbo, un refroidisseur à récupération des gaz d'échappement, un système de récupération de chaleur des freins, un système solaire, une pile à combustible, un moteur électrique, un générateur, une batterie, un véhicule électrique à batterie ou un équipement électronique.
